# EUROPEAN PATENT SPECIFICATION

(11) **EP 1 345 342 B1**
(45) Date of publication and mention of the grant of the patent: **18.02.2004**
(21) Application number: 02360077.8
(22) Date of filing: 04.03.2002
(51) Int. Cl.: H04B 10/155

(54) **An optical transmitter for transmitting signals with high data rates, an optical transmission system and a method therefor**
Optischer Sender, System und Verfahren zur Übertragung von Signalen mit hohen Datenraten
Emetteur optique, système et procédé pour transmission de signaux à débit élévé

(43) Date of publication of application: 17.09.2003
(73) Proprietor: ALCATEL, 75008 Paris (FR)
(72) Inventor: B-low, Henning, Dr., 70806 Kornwestheim (DE)
(74) Representative: Brose, Gerhard, Dipl.-Ing.

(56) References cited:
- EP-A- 1 041 783
- EP-A- 1 143 643
- US-A- 5 926 297
- US-A- 6 141 129
- NAVARRO J A ET AL: "Direct-modulation/direct-detection technology in multigigabit optical networks" ELECTROTECHNICAL CONFERENCE, 1994. PROCEEDINGS., 7TH MEDITERRANEAN ANTALYA, TURKEY 12-14 APRIL 1994, NEW YORK, NY, USA,IEEE, 12 April 1994 (1994-04-12), pages 175-178, XP010130833 ISBN: 0-7803-1772-6
- BIGO S ET AL: "MULTI-TERABIT/S TRANSMISSION OVER ALCATEL TERALIGHTTM FIBER" ELECTRICAL COMMUNICATION, ALCATEL. BRUSSELS, BE, no. 4, 1 October 2000 (2000-10-01), pages 288-296, XP000976732 ISSN: 0013-4252

## Description

The invention relates to an optical transmitter for transmitting signals with high data rates according to the preamble of claim 1, an optical transmission system according to the preamble of claim 7 and a method according to the preamble of claim 8.

Wavelength division multiplexing (WDM) methods are increasingly being used in optical transmission systems. In such methods a number of modulated optical carriers with different carrier frequencies, further referred to as WDM signals, are transmitted simultaneously on an optical transmission link. Each of these carriers can be regarded as independent (wavelength) channel. To enhance the transmission capacity, the number of channels of WDM transmission systems is increasingly being enlarged. To cope with the enlargement of the number of channels, the frequency spacing and correspondingly the wavelength spacing is increasingly reduced. In present-day transmission systems with so-called dense WDM (DWDM), referred to in the following as DWDM transmission systems, shows equidistant frequency spacing of down to 100 GHz. To further increase the transmission capacity, in accordance with the International Telecommunication Union (ITU) it is proposed to cut in halve said frequency spacing to 50 GHz. However, with decreasing frequency spacing, the maximum allowable bandwidth for the frequency spectrum of each WDM-signal decreases accordingly.

The bandwidth of the spectrum of one WDM signal is, besides to the bit rate, strongly related to the modulation method, i.e. the format of the optical pulses of said WDM signal. Commonly used pulse formats in optical systems are the so-called non-return-to-zero (NRZ-) format and the return-to-zero (RZ-) format. The NRZ-format shows a less broad frequency spectrum compared to an RZ-format. Thus, at the same bit rate, the wavelength spacing required is smaller for the NRZ-format compared to the RZ-format.

However, in optical transmission systems, the transmitted optical signals often carry data of a number of signal sources, the signals of which are combined by means of time division multiplexing. Today, electronic time division multiplexing (ETDM) methods are widely used in optical transmission systems. Applying this method in optical transmission systems, electrical input signals are multiplexed by means of an electrical time division multiplexer to generate a multiplexed electrical system. An optical modulator fed with an optical laser light, preferably a continuous wave (CW) laser light, modulates said laser light according to said multiplexed electrical signal. The optical output signal of said modulator shows a multiple bit rate compared to each electrical input signal, e.g. showing a bit rate of 40 Gigabit per second, in the following abbreviated as Gbit/s, if by way of example four electronic signals each showing a bit rate of 10 Gbit/s are combined.

The wavelength of this optical data signal is determined by the laser light source. A continuous wave laser light is used as input to the modulator. The modulation then can be easily carried out such, that the pulse format of the optical output signal shows non-return-to-zero characteristics. Optical signals created in this way are preferably used in a DWDM transmission system with tight channel spacing. However with electronic devices, it is difficult to raise the bit rate of the electronic data signals beyond a certain value. Moreover electrically controlled optical modulators are also limited to a certain bit rate.

Optical time division multiplexing (OTDM-) systems are able to process optical signals of very high bit rates, e.g. beyond 40 Gbit/s in future optical systems. In classical optical time division multiplexers, a pulsed optical signal, for example with a pulse repetition rate of 10 GHz, is emitted by a pulsed laser source. This signal is split in several, for example four, portions of the same intensity, showing the same, original pulse pattern. Each of these portions is fed into a modulator, each responsive to a 10 Gbit/s bit rate electrical data signal. The modulators act as electro-optical converters generating optical signals out of said electrical signals. These optical signals are further combined at an optical coupler with a certain time lag between each of them to generate the multiplexer output signal with a multiple bit rate compared to bit rate of the input signals, e.g. of 40 Gbit/s following the above example.

One problem of said optical time division multiplexing concerns the channel cross talk due to pulse overlapping. To avoid cross talk problems in an optical time division multiplexer described above, the pulses of the modulated optical signals to be combined at the optical coupler must show a return-to-zero like format showing a quite narrow pulse width (e.g. below 30% of the time window, that is theoretically available). But a signal using short pulses shows a large frequency spectrum and thus requires a broad spectral bandwidth. As consequence, in high speed DWDM transmission systems based on signals with an RZ like pulse format as described above, a tight channel spacing as described above can not be realised.

EP 1 143 643 discloses an optical transmission system for a communications system with an optical transmitter, wherein an optical filter is provided at transmitters side for substantially removing one sideband of the modulated optical output signal of said transmitter, thereby reducing the bandwidth of said signal.

The object of the invention is to propose anoptical transmitter , that uses an alternative method to achieve a minimum optical bandwidth at the output.

This object is achieved by an optical transmitter according to the teaching of claim 1, an optical transmission system according to the teaching of claim 7 and a method according to the teaching of claim 8.

The main idea of the invention is to propose an optical transmitter without unnecessary use of bandwidth. The basic principle of the invention is to combine in an optical transmitter a laser light source generating a pulse signal with return-to-zero like pulses with an optical conversion filter. The conversion filter broadens the return-to-zero like pulse to reduce the use of spectral bandwidth before transmitting the signal on the transmission line.

In a further embodiment of the invention the advantages of optical time multiplexing are exploited without unnecessary use of bandwidth.

Further developments of the invention can be gathered from the dependent claims and the following description.

In the following the invention will be explained further making reference to the attached drawings in which:
- Fig.1: schematically shows an optical transmission system according to the invention comprising an optical transmitter according to the invention, an optical transmission line and an optical receiver,
- Fig.2a: schematically shows an optical transmitter with a single optical carrier at its output according to the invention,
- Fig.2b: schematically shows an optical transmitter for a WDM system according to the invention,
- Fig.3: schematically shows an exemplary embodiment of a conversion filter provided for an optical transmitter according to the invention,
- Fig.4a: shows a diagram with an exemplary modulation pulse format of a multiplexed optical signal at the input of a conversion filter according to Fig.3,
- Fig.4b: shows a diagram with an exemplary transfer function curve of a conversion filter according to Fig.3,
- Fig.4c: shows a diagram with an exemplary optical eye pattern of an output signal of a conversion filter output according to Fig.3,
- Fig.5: shows an optical transmitter according to the invention with a vestigial side band filter and
- Fig.6: shows an optical transmitter according to the invention with a duobinary filter.

Fig .1 schematically shows an optical transmission system OS according to the invention. The optical transmission system shows an optical transmitter OT, an optical transmission line OF and an optical receiver OR. In the following, the optical transmitter OT is described in details.

Fig .2a schematically shows an optical transmitter OT being the transmitting component of an optical transmission system according to the invention. The optical transmitter OT comprises an optical time division multiplexing unit OTDM, referred to below as time multiplexer OTDM and a conversion filter CF. Four electrical input signals I1 - 14, symbolised as arrows, are each fed to respective input ports of said time multiplexer OTDM. One multiplexer output signal SI or multiplexed signal SI, symbolised as arrow, that is emitted at the output port of said time multiplexer OTDM, is fed to the input port of the conversion filter CF. At the output port of said conversion Filter CF, the optical transmitter output signal SO is emitted.

The optical time division multiplexing unit OTDM of the optical transmitter OT according to the state of the art preferably shows a structure as described above. A pulsed optical signal is emitted by a pulsed laser source. This signal is split into a certain number of portions of the same intensity, showing the same, original pulse pattern. Each of these portions is fed into a modulator, each responsive to a data signal with a bit rate, that equals the bit rate of the output optical system divided by the number of branches or modulators. The different data signals represent electrical input signals. The modulated signals are then recombined at an optical coupler with a certain time lag between each of them to generate the optical output signal with a multiple bit rate compared to bit rate of the input signals.

One problem of the above described optical time division multiplexing method concerns, as described above, the channel cross talk due to pulse overlapping. To avoid cross talk problems, the pulses of the laser source show a return-to-zero like format showing a narrow pulse width below 30% of the time window, that is theoretically available. Thus, the time multiplexer output signal Sl shows a return-to-zero (RZ) like pulse format with a pulse width, that is far smaller than the bit duration time of said multiplexer output signal SI.

According to the invention, the conversion filter CF is connected to the output of the optical time multiplexer unit OTDM. The conversion filter CF broadens the RZ like pulses of said time multiplexer output signal SI1 up to such a pulse width that pulses do not overlap into adjacent time windows or only overlap such, that time channel division at receivers side remains possible. As consequence, the spectral bandwidth of the output signal SO is reduced compared to input signal SI1 of the conversion filter CF. In principle, a signal with RZ like pulses is converted to a signal showing NRZ like pulses, i.e. a pulse format, that uses a minimum optical bandwidth.

The conversion filter CF may be realised as an optical filter with a planar optical structure like cascaded Mach-Zehnder interferometers, as optical transversal filter or as a fiber bragg grating as known in the prior art. The most important advantage of a method according to the invention, however, is achieved when using time division multiplexing OTDM methods, often used to gain very high bit rates, in combination with wavelength division multiplexing (WDM) methods, often used in optical core networks or for long distance transmission to exploit fiber capacity.

As described in the introduction, in WDM (transmission) systems, a certain number of modulated optical carriers with different frequencies, referred to as WDM-signals, are simultaneously transmitted in an optical waveguide without significant mutual optical influencing (cross talk) between each other. Each optical carrier can be seen as independent wavelength channel or WDM channel. In current WDM systems with tight channel spacing, so-called dense wavelength-division multiplexing (DWDM) systems, for example, 40 channels are transmitted showing an equidistant frequency spacing of the carrier frequencies of down to 50 GHz. The allowed bandwidth of the corresponding WDM signals is at least limited to the distance between the carrier frequencies; however the allowed bandwidth is further limited to smaller values for reasons of accurate signal discrimination in the frequency domain. To allow high bit rates in each the WDM channels, effective use of bandwidth is necessary.

The problem in prior art systems with combined usage of optical time division multiplexing methods and wavelength division multiplexing methods is, that the RZ output signals of optical time multiplexers OTDM are not suitable for effective wavelength division multiplexing. According to the invention, a parallel bandwidth reduction of different OTDM output signals to be combined by a wavelength division multiplexer is performed.

Parallel bandwidth reduction of the said signals can be achieved by connecting a conversion filter CF in each optical branch between the different time division multiplexers and said wavelength division multiplexer. An alternative and more advantageous solution to this approach is shown in the following figure.

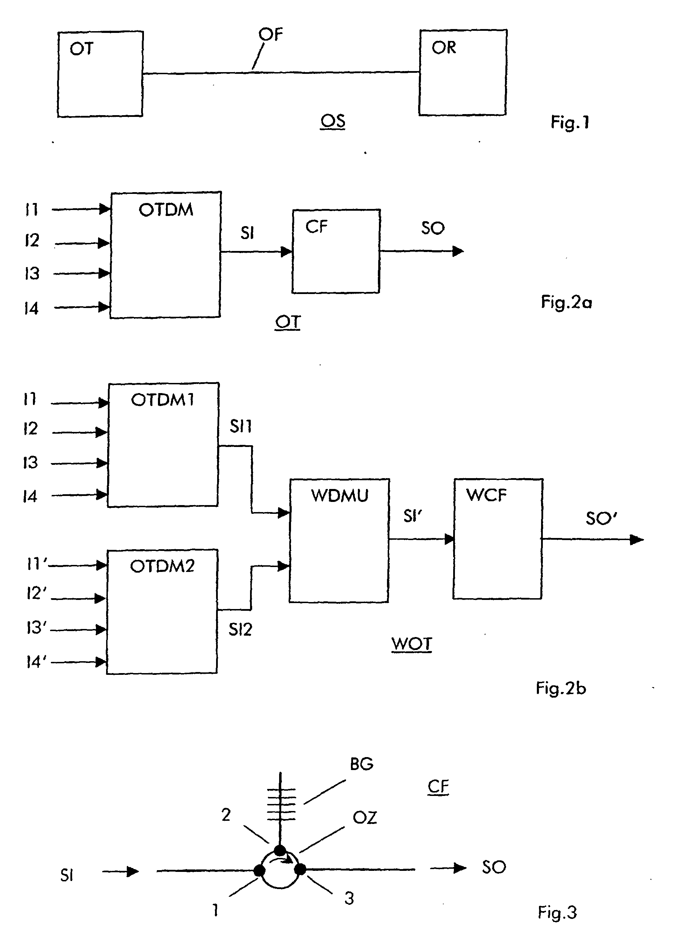

Fig.2b schematically shows a wavelength division multiplex optical transmitter WOT, further referred to as WDM transmitter WOT. The WDM transmitter WOT by way of example comprises two time multiplexers OTDM1 and OTDM2, a wavelength division multiplexer WDM and a WDM conversion filter WCF. The two time multiplexers OTDM1 and OTDM2 each shows four input signals I1- I4 respectively I1'- I4' Each time multiplexer OTDM1 and OTDM2 emits a first time multiplexer (optical output) signal SI1 and a second time multiplexer (optical output) signal SI2 respectively, that are fed to a wavelength division multiplexer WDM. The wavelength division multiplexer output signal Sl' is fed to a WDM conversion filter WCF. The output of said WDM conversion filter WCF emits an WDM output signal SO'.

The time multiplexers OTDM1 and OTDM2 combines said input signals I1 - I4 and I1'- I4' respectively as described under Fig.1 each by first carrying out an electro-optical conversion of said input signals and then optically combining them to said first time multiplexer signal SI1 and to a second time multiplexer signal SI2 respectively. The carrier signal of each of said time multiplexer signals SI1 and SI2 shows different frequencies or wavelengths respectively. Generally, a plurality of time multiplexer signals, each of a different carrier frequency, spaced according to a defined wavelength division multiplex scheme, e.g. showing an equidistant frequency spacing of 50 GHz, are fed to the WDM multiplexer, that in principle acts as optical coupler combining said time multiplexer signals SI1 and SI2. The output signal SI' of the WDM multiplexer is fed to the conversion filter WCF, showing a repetitive optical transfer characteristics with a free spectral range (FSR) equal to integers of the WDM channel spacing, e.g. 50 GHz for the above mentioned frequency spacing example, or with a free spectral range (FSR) showing a multiple whole-numbered multiple of the channel spacing like optical lattice filters consisting og Mach-Zehnder interferometers with e.g. 100 GHz or 200 GHz.

Fig. 3 schematically shows an exemplary embodiment of a conversion filter CF provided for an optical transmitter according to the invention. An optical circulator OZ is shown with an (optical) input port 1, an (optical) intermediate port 2 and an (optical) output port 3. An input fiber IF is connected to the input port 1, a reflection fiber RF is connected to the intermediate port 2 and an output fiber OF is connected to the output port 3. The reflection fiber shows a bragg grating BG integrated in the optical waveguide, a so-called in-fiber bragg grating. An (optical) input signal Sl is fed to the input fiber IF and on (optical) output signal SO is output by the output fiber OF. The circulator OZ is configured in such a way that an optical signal arriving at the input port 1 is dropped again at the intermediate port 2 and an optical signal arriving at the intermediate port 2 is dropped again at the output port 3.

The input signal Sl proceeds to the input port of the circulator OZ. This signal is dropped at the intermediate port 2 into the reflecting fiber RF. The bragg grating BG operates in a reflecting mode. The bragg grating BG is constructed such, that only a part of the irradiated signal is reflected back to the intermediate port 2 depending on the frequency, with an amplitude and a phase spectrum according to the transfer function of the filter CF. This signal then is dropped at the output port 3 forming the output signal SO. As high frequency spectral signal parts are suppressed, i.e. the spectral bandwidth is reduced, the output signal SO shows an expansion of its pulses in the time domain.

The conversion filter CF according to Fig.3 can be applied both to an optical transmitter OT according to the invention and a wavelength division multiplex optical transmitter WOT according to the invention. For applying said conversion filter CF to a wavelength division multiplex optical transmitter WOT, i.e. to be used as WDM conversion filter WCF, the free spectral range (FSR) must be equal to the WDM frequency spacing or of an integer multiple of the WDM frequency spacing.

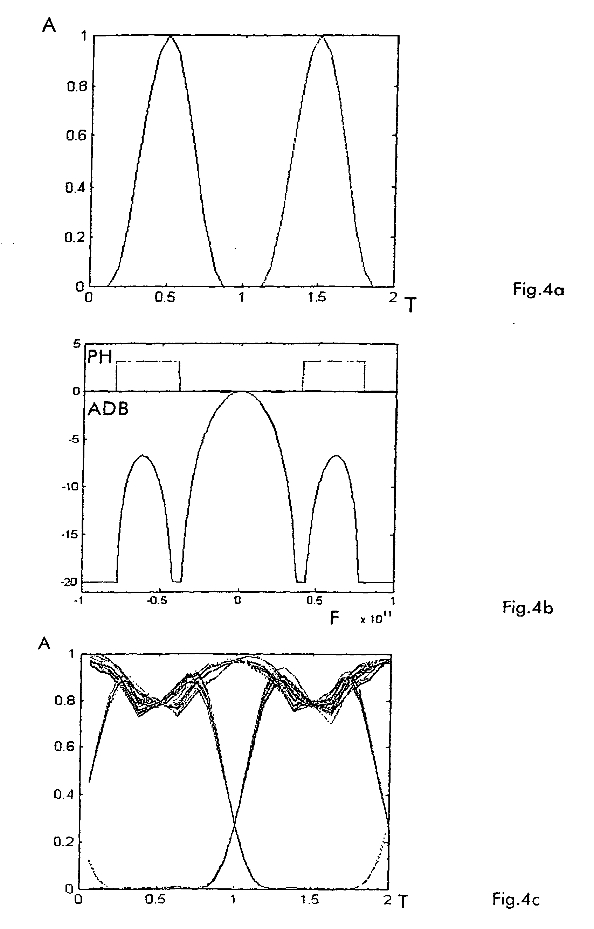

The following Figures, Fig.4a - Fig.4c show simulation results with a conversion filter CF according to Fig.3.

Fig.4a shows an eye diagram with an exemplary RZ modulation pulse format of an optically multiplexed optical signal as input signal Sl of a conversion filter CF. On the abscissa, a normalised time T is marked running from 0 to 2, representing two bit periods of the input signal SI. On the ordinate, a normalised amplitude A is marked, running from 0 to 1. The eye representation shows, that the input signal Sl after each pulse returns to zero, not regarding whether an optical pulse will follow in the next bit period or not. The pulse width is quite narrow, e.g. less than 50 % of the available bit time window regarding the 0.5-level of the normalised amplitude A.

Fig.4b shows a diagram with a schematic exemplary transfer function curve or filter response of a conversion filter CF. In the upper part, a phase filter response and in the lower part, an amplitude filter response is shown. On the abscissa, for both the phase filter response and the amplitude filter response, a frequency F is marked running from -1 to 1, to be multiplied by a factor 1 exp 11. On the ordinate, for the phase filter response, the phase in radiant PH running from 0 to 5 and for the for amplitude filter response, a logarithmic amplitude ADB is marked, running from -20 to 0. The amplitude response shows one main lobe in the frequency center and two smaller side lobes each to the left and the right side of the mail lobe. In the area of the mail lobe, the phase PH equals zero. In the areas of the side lobes, the phase PH equals pi (3,1415...), i.e. the transfer function in these areas shows negative values. The transfer function partly and approximately shows a so-called si-function (si(x) = sin(x)/x) form. In the time domain, the si-function represents a rectangle impulse. As the output pulse of a conversion filter CF is determined by a time domain convolution of the input signal with said filter response, narrow pulses of an input signal Sl are broadened in the output signal. The time delay, that is accompanied by said filtering is not relevant here and thus is not further regarded.

Fig.4c shows an eye diagram of an output signal SO of the conversion filter CF described under Fig.4b, fed by a signal described under Fig.4a. On the abscissa, similar to Fig.4a, a normalised time T is marked running from 0 to 2, representing two bit periods of the output signal SI. On the ordinate, a normalised amplitude A is marked, running from 0 to 1. The eye representation shows, that the pulse width of the output signal SO is significantly broader the pulse format of the input signal SI, e.g. more than 80 % of the available bit time window regarding the 0.5-level of the normalised amplitude A. As it is impossible to realise ideal RZ pulses or NRZ pulses, the pulses of two subsequent bit periods of the output signal SO generated by an inventive transmitter partly overlap just such, that said signal SO does not return to zero between said pulses. The bandwidth of the output signal SO thus is significantly smaller than the bandwidth of the input signal SI.

Alternatively to applying a conversion filter CF with a transfer function described above, other transfer functions might be realised for said conversion filter CF, e.g. a transfer function with a gaussian function like shape for the amplitude.

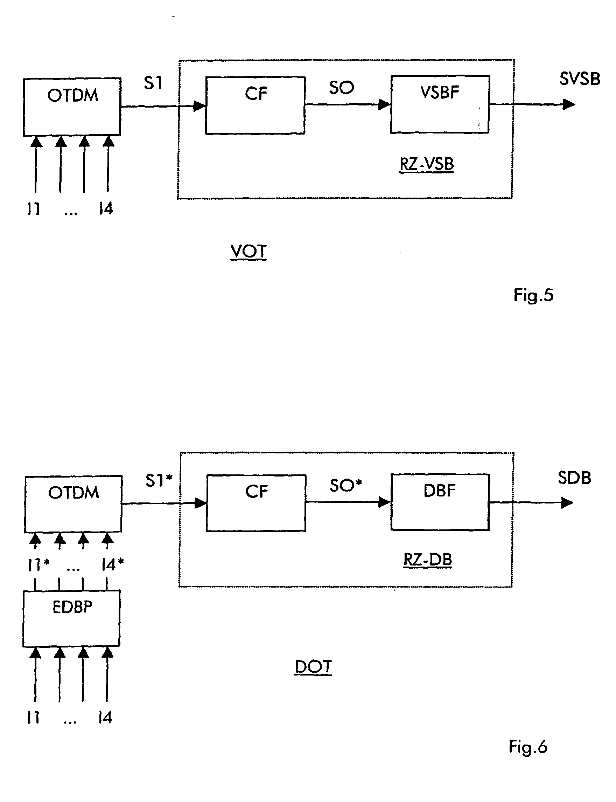

Fig.5 schematically shows a vestigial side band optical transmitter VOT according to the invention, comprising, by way of example, the optical time division multiplexing unit OTDM and the conversion filter CF as shown in Fig.2a. Similarly to Fig.2a, four electrical input signals I1 - I4 are fed to respective input ports of the optical time division multiplexing unit OTDM and the multiplexed signal SI, emitted at the output port of said time multiplexer OTDM, is fed to the input port of the conversion filter CF. The output port of said conversion Filter CF, providing the output signal SO is connected to an additionally provided vestigial side band filter VSBF compared to Fig.2a. The output of said vestigial side band filter VSBF provides the vestigial side band output signal SVSB. The conversion filter CF and the vestigial side band filter VSBF, connected together in series, form a first modified filter RZ-VSB.

The conversion filter CF, transforming return-to-zero signals to non-return-to-zero signals reduces the signal bandwidth of the filter output signal SO as described above. The vestigial side band filter VSBF cuts one of the two side bands of the received signal SO and thus further reduces the bandwidth of respective vestigial side band output signal SVSB compared to the multiplexed signal SI. In ideal case, the vestigial side band filter VSBF allows for reducing the bandwidth of the respectively received signal SO to the half. Thus, the bandwidth of the multiplexed signal SI is reduced in two stages.

In an advantageous embodiment, the first modified filter RZ-VSB is realised as single optical filter, the transfer characteristics of which are corresponding to the transfer characteristics of the described filters connected in series, i.e. the optical functionalities of each of both filters CF and VSBF are performed by said single optical filter.

Fig.6 schematically shows a duobinary optical transmitter DOT according to the invention, comprising, by way of example, the optical time division multiplexing unit OTDM and the conversion filter CF as shown in Fig.2a. Additionally an electrical duobinary precoder EDBP and a duobinary filter DBF are shown. The four electrical input signals I1- I4 known from Fig.2a are fed to the electrical duobinary precoder EDBP. Said electrical duobinary precoder EDBP generates precoded input signals I1*- I4* that are fed to the input ports of the optical time division multiplexing unit OTDM. A precoded multiplexer output signal SI*, emitted at the output port of said time multiplexer OTDM, is fed to the input port of the conversion filter CF. The output port of said conversion Filter CF, providing the precoded output signal SO* is connected to the duobinary filter DBF. The output of said duobinary filter DBF provides the duobinary output signal SDB. The conversion filter CF and the duobinary filter DBF, connected together in series, form a second modified filter RZ-DB.

The conversion filter CF reduces the bandwidth of the received multiplexed signal Sl as described before. The precoded multiplexed signal SI* shows two different discrete intensity values (representing the possible bit values "0" and "1"). The duobinary coder or duo binary filter DBF generates a tree intensity value signal SDB e.g. splitting the received signal SO* into two signals SO*, time delaying one of these signals SO* to the duration of one bit slot and adding or coupling the delayed signal and the non delayed signal. The generated duobinary signals SDB requires less bandwidth than the comparable NRZ signal SO*.

For avoiding error propagation in the decoder of a receiver, not shown in the drawing and not further discussed here and further for enabling error detection by said receiver, the original electrical input signals are electrically precoded by the electrical duobinary precoder EDBP. The precoder may comprise a feed back loop as known from the prior art. The precoder may be realized using standard logic integrated circuits.

In an advantageous embodiment, the second modified filter RZ-DB is realised as single optical filter with transfer characteristics similar to the transfer characteristics of the described filters CF and DBF connected in series.

A further embodiment of the invention concerns the integration of a WDM conversion filter WCF into a WDM multiplexer or WDM demultiplexer e.g. realised as arrayed wave guide. In such a device RZ like signals can be multiplexed and converted to NRZ like signals at the same time.

## Claims

1. An optical transmitter (OT, WOT) for transmitting signals with high data rates, comprising at least one optical signal source for generating a return-to-zero pulse signal (SI, SI1, SI2), comprising a conversion filter (CF, WCF) at the output of the optical transmitter (OT, WOT) for reducing the spectral bandwidth of an output signal (SO, SO'), **characterised in, that** the conversion filter (CF, WCF) comprises filter means, that are realised such, that the pulse width of the signal at the input of said conversion filter is broadened to such an extent, that the output signal (SO, SO') has a non return-to-zero format.

2. An optical transmitter (OT, WOT) according to claim 1, **characterised in, that** said at least one optical signal source is realised by at least one corresponding optical time division multiplexer (OTDM) and each optical time division multiplexer (OTDM) is realised such, that a corresponding return-to-zero pulse multiplexed signal (SI, SI') is generated out of at least two input signals (I1, I2).

3. An optical transmitter (WOT) according to claim 2, **characterised in, that** two or more time division multiplexers (OTDM1, OTDM2) and a wavelength division multiplexer (WDMU) are comprised, wherein the wavelength division multiplexer (WDMU) comprises at least two optical inputs to combine the optical output signals (SI1, SI2) of said time division multiplexers (OTDM1, OTDM2) to generate a time and wavelength multiplexed signal (SI') with a defined frequency spacing, and that the conversion filter (WCF) for reducing the use of spectral bandwidth of the time and wavelength division multiplexed signal (SI') is a frequency repetitive conversion filter (WCF) showing a free spectral range corresponding to said defined frequency spacing.

4. An optical transmitter (VOT) according to claim 1, **characterized in, that** an optical vestigial side band filter (VSBF) is comprised connected in series after the conversion filter (CF).

5. An optical transmitter (DOT) according to claim 1, **characterized in, that** an optical duo binary filter (DBF) is comprised connected in series to the conversion filter (CF).

6. An optical transmitter (DOT) according to claim 4, **characterized in, that** an electrical duobinary precoder (EDBP) is comprised with means to precede the electrical input signals (I1, I2) such, that an error propagation of a decoding error at receivers side can be avoided.

7. An optical transmission system (OS), with an optical transmitter (OT), an optical transmission link (OF) and an optical receiver (OR), wherein the optical transmitter comprises an optical signal source for generating a return-to-zero pulse signal, and wherein the optical transmitter (OT) further comprises a conversion filter (CF, WCF) for reducing the optical bandwidth at the output of said optical transmitter, **charatcterised in, that** said filter comprises filter means, that are realised such, that the return-to-zero pulse signal (SI, SI') at the input at said filter (CF, WCF) is broadened up to a non return-to-zero format (SO, SO') at the output of said filter.

8. A method for generating an optical output signal (SO, SO'), wherein the spectral bandwidth of a generated signal (SI, SI') having a return-to-zero pulse format is reduced by a conversion filter (CF, WCF), **characterized in, that** the pulses of said generated signal (SI, SI') are broadened such, that a non return-to-zero format is obtained for said optical output signal (SO, SO').

## Patentansprüche

1. Ein optischer Sender (OT, WOT) zum Senden von Signalen mit hohen Datenraten, der mindestens eine optische Signalquelle zur Erzeugung eines Return-to-Zero-Impulssignals (SI, SI1, SI2) enthält, der ein Umwandlungs-Filter (CF, WCF) am Ausgang des optischen Senders (OT, WOT) zur Verringerung der spektralen Bandbreite des Ausgangssignals (SO, SO') enthält, **dadurch gekennzeichnet, dass** das Umwandlungs-Filter (CF, WCF) Filter-Mittel enthält, die so realisiert sind, dass die Impulsbreite des Signals am Eingang des Umwandlungs-Filters in dem Umfang verbreitert wird, dass das Ausgangssignal (SO, SO') ein Non-Return-to-Zero-Format hat.

2. Ein optischer Sender (OT, WOT) gemäß Anspruch 1, **dadurch gekennzeichnet, dass** die mindestens eine optische Signalquelle durch mindestens einen entsprechenden optischen Zeitmultiplexer (OTDM) realisiert wird, und jeder optische Zeitmultiplexer (OTDM) so realisiert ist, das ein entsprechendes gemultiplextes Retuin-to-Zero-Impulssignal (SI, SI') aus mindestens zwei Eingangssignalen (I1, I2) erzeugt wird.

3. Ein optischer Sender (WOT) gemäß Anspruch 2, **dadurch gekennzeichnet, dass** zwei oder mehr Zeitmultiplexer (OTDM1, OTDM2) und ein Wellenlängen-Multiplexer (WDMU) enthalten sind, wobei der Wellenlängen-Multiplexer (WDMU) mindestens zwei optische Eingänge aufweist, um die optischen Ausgangssignale (SI1, SI2) der Zeitmultiplexer (OTDM1, OTDM2) zu kombinieren und ein Zeit- und Wellenlängen-Multiplexsignal (SI') mit einem definierten Frequenzabstand zu erzeugen, und dadurch, dass das Umwandlungs-Filter (WCF) zur Verringerung der Verwendung spektraler Bandbreite des Zeit- und Wellenlängen-Multiplexsignals (SI') ein frequenzwiederholendes Umwandlungs-Filter (WCF) ist, das einen freien Spektralbereich aufweist, der dem definierten Frequenzabstand entspricht.

4. Ein optischer Sender (VOT) gemäß Anspruch 1, **dadurch gekennzeichnet, dass** ein optisches Restseitenbandfilter (VSBF) enthalten ist, das nach dem Umwandlungs-Filter (CF) in Reihe geschaltet ist.

5. Ein optischer Sender (DOT) gemäß Anspruch 1, **dadurch gekennzeichnet, dass** ein optisches Duobinär-Filter (DBF) enthalten ist, das nach dem Umwandlungs-Filter (CF) in Reihe geschaltet ist.

6. Ein optischer Sender (DOT) gemäß Anspruch 4, **dadurch gekennzeichnet, dass** ein elektrischer Duobinär-Vorcodierer (EDBP) mit Mitteln enthalten ist, um die elektrischen Eingangssignale (I1, I2) so vorzucodieren, dass eine Fehlerausbreitung eines Decodier-Fehlers auf der Empfängerseite verhindert werden kann.

7. Ein optisches Übertragungssystem (OS) mit einem optischen Sender (OT), einer optischen Übertragungsverbindung (OF) und einem optischen Empfänger (OR), worin der optische Sender eine optische Signalquelle zur Erzeugung eines Return-to-Zero-Impulssignals enthält, und worin der optische Sender (OT) weiterhin ein Umwandlungs-Filter (CF, WCF) zur Verringerung der optischen Bandbreite am Ausgang des optischen Senders enthält, **dadurch gekennzeichnet, dass** das Filter Filter-Mittel umfasst, die so realisiert sind, dass das Return-to-Zero-Impulssignal (SI, SI') am Eingang des Filters (CF, WCF) auf ein Non-Return-to-Zero-Format (SO, SO') am Ausgang des Filters verbreitert wird.

8. Ein Verfahren zur Erzeugung eines optischen Ausgangssignals (SO, SO'), worin die spektrale Bandbreite eines erzeugten Signals (SI, SI'), das ein Return-to-Zero-Impuls-Format hat, durch ein Umwandlungs-Filter (CF, WCF) verringert wird, **dadurch gekennzeichnet, dass** die Impulse des erzeugten Signals (SI, SI') so verbreitert werden, dass ein Non-Retum-to-Zero-Format für das optische Ausgangssignal (SO, SO') erhalten wird.

## Revendications

1. Emetteur optique (OT, WOT) permettant de transmettre des signaux avec des débits de données élevés, comprenant au moins une source de signaux optiques pour générer un signal d'impulsion de retour à zéro (SI, SI1, SI2), comprenant un filtre de conversion (CF, WCF) à la sortie de l'émetteur optique (OT, WOT) pour réduire la largeur de bande spectrale d'un signal de sortie (SO, SO'), **caractérisé en ce que** le filtre de conversion (CF, WCF) comprend des moyens de filtre, qui sont réalisés de telle sorte que la largeur d'impulsion du signal à l'entrée dudit filtre de conversion est élargie jusqu'à tel point que le signal de sortie (SO, SO') présente un format de non retour à zéro.

2. Emetteur optique (OT, WOT) selon la revendication 1, **caractérisé en ce que** ladite au moins une source de signaux optiques est réalisée par au moins un multiplexeur temporel optique (OTDM) correspondant, et chaque multiplexeur temporel optique (OTDM) est réalisé de telle sorte qu'un signal multiplexé impulsionnel de retour à zéro (SI, SI') est généré à partir d'au moins deux signaux d'entrée (I1, I2).

3. Emetteur optique (WOT) selon la revendication 2, **caractérisé en ce que** deux ou plusieurs multiplexeurs temporels (OTDM1, OTDM2) et un multiplexeur en longueur d'onde (WDMU) sont compris, dans lequel le multiplexeur en longueur d'onde (WDMU) comprend au moins deux entrées optiques pour combiner les signaux de sortie optiques (SI1, SI2) desdits multiplexeurs temporels (OTDM1, OTDM2) pour générer un signal multiplexé en temps et en longueur d'onde (SI') avec un intervalle de fréquences défini, et **en ce que** le filtre de conversion (WCF) permettant de réduire l'utilisation de la largeur de bande spectrale du signal multiplexé en temps et en longueur d'onde (SI') est un filtre de conversion répétitive en fréquence (WCF) présentant un intervalle spectral libre correspondant audit intervalle de fréquences défini.

4. Emetteur optique (VOT) selon la revendication 1, **caractérisé en ce qu'**un filtre de bande latérale résiduelle optique (VSBF) est compris, relié en série après le filtre de conversion (CF).

5. Emetteur optique (DOT) selon la revendication 1, **caractérisé en ce qu'**un filtre duobinaire optique (DBF) est compris, relié en série au filtre de conversion (CF).

6. Emetteur optique (DOT) selon la revendication 4, **caractérisé en ce qu'**un précodeur duobinaire électrique (EDBP) est compris avec des moyens pour précoder les signaux d'entrée électriques (I1, I2) de sorte qu'une propagation d'erreur d'une erreur de décodage du côté récepteur peut être évitée.

7. Système de transmission optique (OS), avec un émetteur optique (OT), une liaison de transmission optique (OF) et un récepteur optique (OR), dans lequel l'émetteur optique comprend une source de signaux optiques pour générer un signal impulsionnel de retour à zéro, et dans lequel l'émetteur optique (OT) comprend en outre un filtre de conversion (CF, WCF) permettant de réduire la largeur de bande optique à la sortie dudit émetteur optique, **caractérisé en ce que** ledit filtre comprend des moyens de filtre, qui sont réalisés de telle sorte que le signal impulsionnel de retour à zéro (SI, SI') à l'entrée dudit filtre (CF, WCF) est élargi jusqu'à un format de non retour à zéro (SO, SO') à la sortie dudit filtre.

8. Procédé permettant de générer un signal de sortie optique (SO, SO'), dans lequel la largeur de bande spectrale d'un signal généré (SI, SI') ayant un format d'impulsion de retour à zéro est réduite par un filtre de conversion (CF, WCF), **caractérisé en ce que** les impulsions dudit signal généré (SI, SI') sont élargies de telle sorte qu'un format de non retour à zéro est obtenu pour ledit signal de sortie optique (SO, SO').
